# EUROPEAN PATENT SPECIFICATION

(11) **EP 1 588 593 B1**
(45) Date of publication and mention of the grant of the patent: **25.03.2009**
(21) Application number: 04701013.7
(22) Date of filing: 09.01.2004
(51) Int. Cl.: H05H 6/00, H05H 3/06

(54) **CODED TARGET FOR NEUTRON SOURCE**
CODIERTES TARGET FÜR EINE NEUTRONENQUELLE
CIBLE CODEE POUR SOURCE DE NEUTRONS

(30) Priority: 16.01.2003 US 440392 P; 12.12.2003 US 733282
(43) Date of publication of application: 26.10.2005
(73) Proprietor: SOCIETE ANONYME D'ETUDES ET REALISATIONS NUCLEAIRES - SODERN, 94451 Limeil Brevannes Cédex (FR)
(72) Inventor: LE TOURNEUR, Philippe, F-77330 OZOIR LA FERRIERE (FR)
(74) Representative: Poulin, Gérard
(86) International application number: PCT/EP2004/050009
(87) International publication number: WO 2004/064462

(56) References cited:
- WO-A-95/14245
- DE-A- 2 053 881
- FR-A- 2 738 669
- US-A- 3 553 466
- US-A- 4 426 722
- US-A- 5 135 704

## Description

### TECHNICAL FIELD

The present invention concerns a neutron source such as a neutron generat ing tube or a particle accelerator.

Neutron generating tubes are mainly used to carry out imaging or analysis, for example in the nondestructive testing of objects. The neutrons make it possible to determine the presence of practically all of the elements in the periodic table. One may thus use neutron generating tubes for analysing, controlling, dosing or searching for materials, for example drugs, explosives and radioactive waste in drums, ore or bulk materials.

Particle accelerators such as linear accelerators supply neutrons with wide energy ranges. The applications may also be radiography applications or analysis of materials or even applications in nuclear medicine or in physics research.

### STATE OF THE PRIOR ART

In said devices, the neutrons are generated by a target when it is bombarded with a highly accelerated particle beam (see e.g. FR-A-2738669).

In methods using the fusion of hydrogen, the targets contain heavy isotopes of hydrogen: deuterium and / or tritium. A fusion nuclear reaction takes place between the nuclei of deuterium or tritium of the target and the accelerated particles from, in general, an ion source.

In neutron generators, the particles are hydrogen isotope ions. The ions are accelerated between two electrodes.

In accelerators, the particles are also hydrogen ions (deuterium or tritium) or other heavier ions. The acceleration may be achieved by means of a succession of electrodes or by coupling in quadripolar radiofrequency accelerating cavities.

The collision between a nucleus of deuterium and a nucleus of tritium supplies a neutron with an energy close to 14 MeV and an a particle with an energy of around 3.6 MeV. The neutrons are emitted in all directions, in other words in 4π steradians. For each neutron emitted in a direction an a particle is emitted substantially in the opposite direction. This mechanism also takes place with the reaction betwee n two deuterium nuclei. The energy of the neutron is in this case 2.45 MeV. It is associated with a particle of helium 3 of 0.8 MeV emitted in the opposite direction, at about a low angle.

In order for the nuclear reaction efficiency to be high, the targets should have a high density of nuclei. One generally fixes the tritium and / or deuterium nuclei in a hydrogen fixing metal such as, for example, titanium, zirconium or erbium. The particle beam also has to be sufficiently intense and homogeneous. One therefore tends to focus the particle beam and make it bombard a small homogeneous target. However, a compromise has to be found between the lifetime of the target and the efficiency. Indeed, for a total given emission, the lifetime of a target is proportional to its surface area. Moreover, it is not easy to focus the particle beam with precision. Said focusing must be consistent with the geometry of the target. In neutron generating tubes, one is obliged to provide a series of electrodes of appropriate geometry and to raise them to voltages of a specific value. The focusing device may become very sophisticated. Finally, the smaller the target, the lower the flow of emitted neutrons and the longer the analysis time.

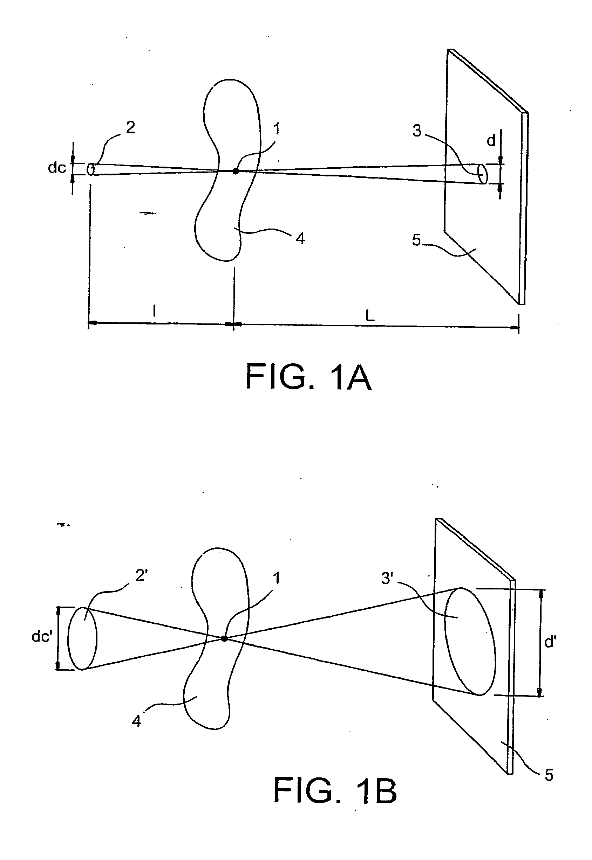

Small targets (substantially point shaped) are required for transmission radiography. They lead to a better image quality than that obtained with a more extended target, particularly when one wishes to detect small point objects (for example, defects in a structure). One may refer to Figure 1A which shows, in an image plane 5, the image 3 of a point 1 of an object 4, given by a point target 2. The size d of said image 3 is expressed by the following relation: d = dc.L/1, where dc is the size of the target 2, L is the distance between the object 4 and the image plane 5 and 1 the distance between the object 4 and the target 2.

In Figure 1B, the target 2' is no longer point shaped but instead extended. The image 3' of the point object 1 in the image plane 5 is a lot bigger than in Figure 1A, which leads to an overall image of the object which will be blurred. The size d' of said image 3' is expressed by the following relation: d' = dc'.L/1, where dc' is the size of the target 2', L is the distance between the object 4 and the image plane 5 and 1 the distance between the object 4 and the target 2' .

### DESCRIPTION OF THE INVENTION

The aim of the present invention is, as a matter of fact, to propose a neutron source that does not have the limitations and difficulties cited above.

One aim of the invention is to form a target that has both a longer lifetime and an acceptable efficiency.

Another aim of the invention is to form a target that does not need to be associated with a precisely focused particle beam.

A further aim of the invention is to provide a target suited to delivering a higher flow of neutrons than that of point targets.

In order to attain these aims, according to claim 1, the invention is a neutron source with a target intended to emit neutrons when it is bombarded with particles and said target comprises neutron emissive parts and neutron non -emissive parts which are juxtaposed, said emissive and non-emissive parts forming a pattern of the type of that of a coded mask.

The emissive parts may be formed from at least one metal hydride, the metal of the metal hydride being deposited on a support in non -hydrogen fixing material through a stencil.

In one embodiment, the target may comprise an extended neutron emissive zone formed from at least one metal hydride, said extended zone cooperating with a mask in neutron non-emissive material, the non -emissive material of the mask partially covering up the extended emissive zone vis-a-vis the particles and forming non - emissive parts.

The extended emissive zone may be supported by a support in a non-hydrogen fixing material.

The non-hydrogen fixing material of the support may be chosen from among copper, silver or gold, said metals being used alone or in combination.

The metal of the metal hydride may be chosen from among titanium, zirconium, erbium, scandium and vanadium.

The non-emissive material of the mask may be chosen from among molybdenum, steel, iron, copper, tungsten or tantalum, said metals being used alone or in combination.

According to claim 8, the present invention also concerns a particle accelerator which comprises a neutron source thus defined.

According to claim 16, the present invention also concerns a neutron generating tube which comprises a target thus defined .

The present invention also concerns the application of the neutron generating tube thus defined to transmission radiography, in which the target cooper ates with geometric deconvolution means to decode an untreated image given by the neutrons having crossed through an object to be radiographied in a reconstructed image of the object.

The present invention also concerns the application of the particle accelerator thus defined to transmission radiography, in which the target cooperates with geometric deconvolution means to decode an untreated image given by the neutrons having crossed through an object to be radiographied in a reconstructed image of the object.

The present invention also concerns a neutron generating tube thus defined, said tube being equipped with an a particle detector associated with the emission of neutrons.

The present invention also concerns a particle accelerator thus defined, said accelerator being equipped with an α particle detector associated with the emission of particles.

The α particle detector may comprises a plurality of pixels arranged in a matrix.

Advantageously, the target may be inclined in relation to the direction of the particles that are bombarding it in order to facilitate the detection of α particles without overly disrupting the interaction of the particle beam in the target.

In another configuration, the target may be substantially parallel to the α particle detector.

The present invention also concerns the application of the neutron generating tube thus defined with an α particle detector to the analysis of substances and/or the imaging of substances that may be hidden, the tube cooperating with at least one γ radiation detector and geometric deconvolution means for a gamma pseudo -image obtained by coincidence of gamma events and α parti cles detected by the α particle detector.

The present invention also concerns the application of the particle accelerator thus defined with an α particle detector to the analysis of substances and/or the imaging of substances that may be hidden, the accelerator cooperating with at least one γ radiation detector and geometric deconvolution means for a gamma pseudo-image obtained by coincidence of gamma events and a particles detected by the α particle detector.

The present invention also concerns the application of the neutron generating tube thus defined with an α particle detector to the imaging of substances that may be hidden, the tube cooperating with at least one neutron detector.

The present invention also concerns the application of the particle accelerator thus defined with an α particle detector to the imaging of substances that may be hidden, the accelerator cooperating with at least one neutron detector.

### BRIEF DESCRIPTION OF THE DRAWINGS

The present invention will be more fully understood on reading the description of embodiments , given purely by way of indication and in nowise limitative, and by referring to the appended drawings in which:
Figures 1A, 1B are diagrams illustrating the principle of transmission radiography of an object with uniform targets, respectively point or extended targets;
Figures 2A, 2B show a front view of two examples of targets according to the invention;
Figure 3A shows a transmission radiography installation for an object that makes use of a neutron generating tube according to the invention and Figure 3B shows the radiography obtained with the said installation and an object less transparent to neutrons;
Figures 4A to 4C show different steps of forming one embodiment of a target according to the invention;
Figures 5A, 5B show different steps of forming another embodiment of a target according to the invention;
Figure 6 shows a particle accelerator that is the subject of the invention;
Figure 7A shows a neutron generating tube having associated particles that is the subject of the invention and Figures 7B, 7C accelerators having associated particles that are the subject of the invention;
Figures 8A, 8B and 8C show material imaging and/or analysis installations that make use respectively of a point target neutron generating tube, an extended target neutron generating tube and a neutron generating tube or particle accelerator that are th e subject of the invention.

The different parts shown in the figures are not necessarily represented on the same scale, in order to make the figures more legible.

Identical, similar or equivalent parts in the different figures described below have the same numerical references in order to facilitate going from one figure to another.

### DETAILED DESCRIPTION OF SPECIFIC EMBODIMENTS

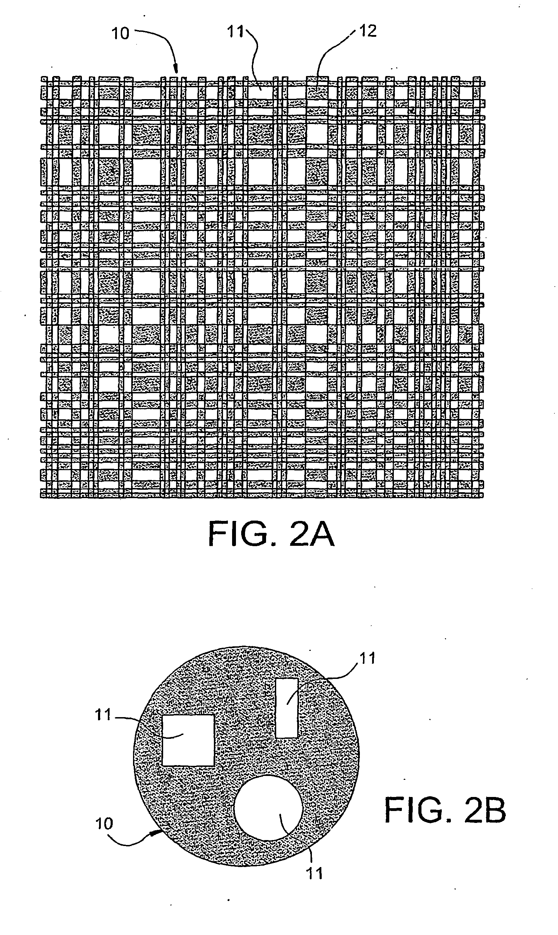

We will now refer to Figure 2 which shows a front view of an example of a target 10. It comprises juxtaposed emissive parts 11 and non-emissive parts 12, said emissive parts 11 and non-emissive parts 12 forming a pattern of the type of that of a coded mask.

It will be recalled that a coded mask is a mask that is pierced with a plurality of holes placed i n a more or less random manner. The surface area of said holes may attain 50% or more of the total surface area of the mask. Coded masks are used in the medical field or in astronomy in telescopes. In these applications, the coded masks are placed between the object to be observed (planet, star) and the observer (or the device capturing the image).

The emissive parts 11 of the target 10 correspond to the holes that the coded mask would have and the non-emissive parts 12 correspond to the solid parts of the coded mask. Obviously, the reverse is possible.

Each emissive part 11 may also be considered as a pinhole. All of the emissive parts 11 together constitute a multi pinhole.

The emissive parts 11 may be assimilated to point shaped target s and the whole target 10 to a quasi -point shaped target. The pattern represented in Figure 2A is relatively complex and other coded mask patterns may be used, such as that illustrated in Figure 2B, which only comprises three emissive parts 11, o ne substantially circular, a second substantially square and a third substantially rectangular.

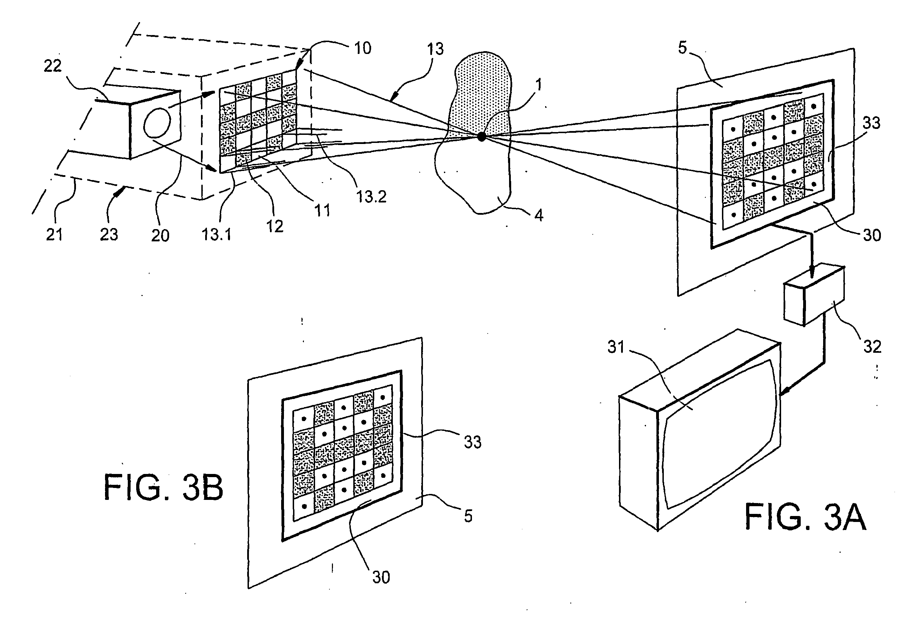

Consequently, when such a target 10, included in a source of electrons 23 schematically shown in Figure 3A, is bombarded for example by ions of deuterium or accelerated deuterium and tritium 20, only the emissive parts 11 are going to emit neutrons. Said neutron source 23 may be a neutron generating tube or a particle accelerator. It comprises a jacket 21, the target 10 and an ion source 22, for example a Penning source type, in which deuterium or a mixture of deuterium and tritium is ionised. The ions are accelerated between the ion source 22 and the target 10 by acceleration means, which are not represented for reasons of clarity.

The pattern of the target 10 is simpler than in Figure 2A. The target 10 is going to emit a heterogeneous flow of neutrons 13. In this example, the flow of neutrons 13 is divided into a plurality of secondary flows 13.1, 13.2 and said secondary flows are only initiated in order not to overcrowd the figure.

The flow of neutrons 13 emitted will "convey" with it the pattern of the target 10 through an object 4 to be examined or analysed.

One observes that in the invention, the target 10, which plays the role of a coded mask, is not inserted between the object and an observer as in normal applications of coded masks but it is placed upstream of the object.

The flow of neutrons 13 is a flow marked or coded by the pattern of the target 10. In the manner of Figure 1A, an image 30 of a point 1 of an object 4, given by the target 10 according to the invention, is projected on an image plane 5. But now, the image obtained 30 in the image plane 5 is an untreated image of the object 4 and said untreated image must be treated in order to obtain a reconstructed image 31. In a way, the untreated image comprises as many superimposed images of the object as there are emissive parts in the target, each of said emissive parts acting like a point target. The untreated image 30 may be acquired, for example, by a neutron detector 33 configured as a matrix, formed from materials sensitive to rapid neutrons such as recoil proton scintillating materials.

The treatment is called geometric deconvolution and is performed in a computerised manner by means of an appropriate algorithm. Means of treating the untreated image 30 are shown schematically with the reference 32.

In fact, the untreated image 30 obtained conveys two items of information, one relating to the pattern of the target 10 and the other relating to the transparency of the object 4. Deconvolution consists in separating the two items of information. It is a well known method and widely used in optics or in techniques using coded masks. This treatment is possible because the pattern of the target 10 is known by experimentation, modelling or calculation.

We have shown that the intensity of each point of the untreated image is the integral on the object of the product of the transparency of each point 1 of the object 4 multiplied by a term depending on the target 10. In the Fourier space or frequency space, the Fourier transform of the untreated image is the product of the Fourier transforms of the object and an image of the target 10 obtained through an infinitely small pinhole. It will be recalled that a pinhole is, in photograph, a small hole placed in a screen arranged in place of the objective of a photographic device. In order to obtain the reconstructed image of the object, it is therefore necessary to take the inverse Fourier transform of the ratio of Fourier transforms of the untreated image and of the target. The choice of the pattern of the target makes it possible to carry out this division correctly. With a traditional extended target, which is emissive in a uniform manner, the differences bet ween neighbouring points of the object do not stand out. Other calculation methods exist; they enable the same result to be obtained.

The reconstructed image 31 of the object 4 (or the point 1 of the object) obtained after geometric deconvolution is substantially that which one would have obtained if one had used a point target.

Consequently, according to the invention, one obtains a reconstructed image 31 of quality comparable to that which would have been obtained with a point target, in other words a sharp image with a good resolution. Since the target according to the invention has dimensions greater that those of the point target which would have given the same image, it has a longer lifetime compared to the point target. The gain in lifetime may be very important because the ratio of surface areas between the target according to the invention and the point target which would have given the same image may attain, depending on the case, factors of one hundred -fold or one thousand-fold. The flow of neutrons is thus increased compared to that of the point target. With equal emission surface area and equal emission intensity, a target according to the invention makes it possible to obtain much better reconstructed image quality than a conventional homogeneous target.

The pattern of the target 10 appears on the image plane 5 in a more or less intense manner depending on whether the object 4 allows the neutron flow to pass to a greater or lesser extent. The difference between the untreated image 30 obtained with the transmission radiography installation in Figure 3A and that in Figure 3B is only at the level of its intensity. The untreated image 30 in Figure 3B is less intense than that in Figure 3A. This means that the object that has given the untreated image 30 in Figure 3B is less transparent to neutrons than that shown in Figure 3A.

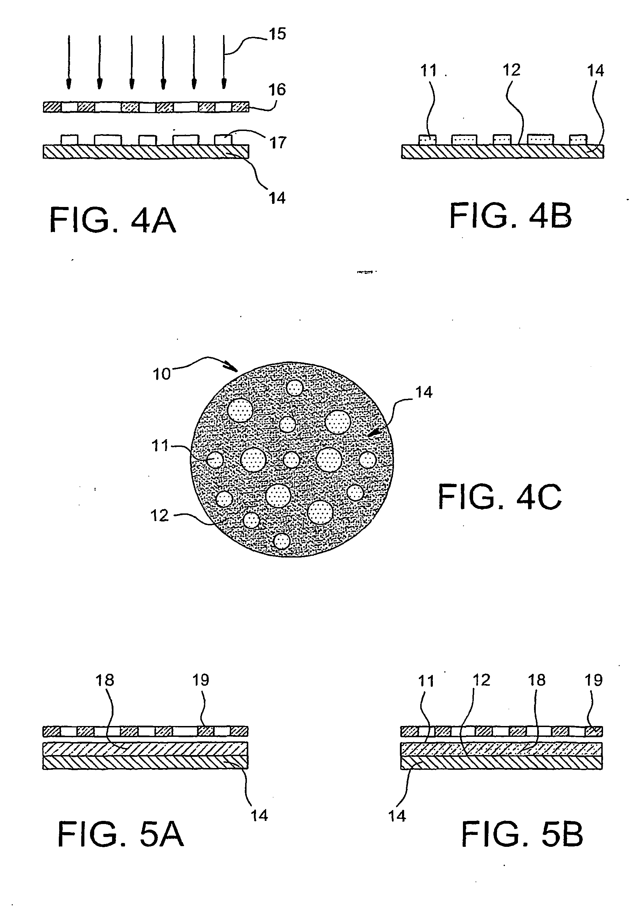

We will now describe a first embodiment of a target for the neutron source according to the invention, while referring to Figures 4A, 4B and 4C. The target comprises a non -emissive support 14, in non-hydrogen fixing material. Said material may be chosen from among copper, silver, gold or other, said metals being used alone or in combination. On the support 14, usually circular without this being obligatory, is deposited at least one hydrogen fixing material 15 through a stencil 16. Said stencil 16 has a pattern that corresponds to that which the target should have, in other words a pattern of the type of that of coded masks. Said stencil 16 may be formed from metal such as iron or aluminium for example. As hydrogen fixing metal, one may employ for example titanium, zirconium, erbium, scandium or vanadium. The hydrogen fixing material 15 forms blocks 17 on the support 14. Said blocks 17 are going to contribute to forming the emissive parts 11 of the target. The parts of the support 14 located between the blocks 17 are going to form the non - emissive parts 12 of the target. The hydrogen fixing material may be deposited, for example , by cathode sputtering, vacuum evaporation or other method. The thickness of the blocks 17 is typically several micrometers. The support 14 equipped with blocks 17 is then brought into the presence of hydrogen so that the block 17 material traps the hydrogen and fixes it. The hydrogen fixed blocks 17 are represented in Figure 4B. This hydrogen fixing step takes place while the target is placed in a vacuum jacket (which is that of the tube or the accelerator that uses the target) containing a gaseous mixture of tritium and / or deuterium under low pressure. Once hydrogen fixed, the blocks 17 are going to make it possible to emit neutrons when they are bombarded with a particle beam. Figure 4C shows a front view of a finished target, in the form of a disc.

Figures 5A and 5B show another embodiment of a target. As in the previous example, the support 14 in non-hydrogen fixing material is shown. Said support 14 is covered in a uniform manner with a metallic hydrogen fixing material 18. As metallic hydrogen fixing material one may use, for example, titanium, zirconium, erbium, scandium or vanadium, said metals being used alone or in combination. Said deposition may be carried out by sputtering or as in the previous example.

The hydrogen fixing material 18 is covered with a mask 19 that comprises a pattern of the type of that of a coded or multi-pinhole mask. Said mask 19 is formed of a material that does not emit neutrons, which does not sputter or which sputters as little as possible when it is bombarded by particles and which is compatible with vacuum techniques. Said material may be, for example, chosen from among molybdenum or copper, iron, tungsten, tantalum or steel, said metals being used alone or in combination. The mask 19 is substantially parallel with the surface of the layer 18. A gap of around one millimetre or more can separate the mask 19 and the layer 18. Obviously, the mask may be in contact with the hydrogen fixing material instead of being slightly separated.

The assembly formed of the support 14, the layer 18 and the mask 19 is then brought into the presence of hydrogen so that the layer 18. traps the hydrogen and fixes it. This hydrogen fixing step takes place, as previously, while the target is placed in a vacuum jacket (which is that of the tube or accelerator that uses the target) containing a gaseous mixture of tritium and / or deuterium under low pressure. The layer 18 then forms an extended zone capable of emitting neutrons but it is partially masked by the mask 19. The hydrogen fixed material of the layer 18 located at the openings of the mask 19 forms the emissive parts 11 of the target whereas the solid parts of the mask 19 form the non -emissive parts 12 of the target. The parts of layer 18 placed behind the solid parts of the mask 19 are inactive even though impregnated with hydrogen. Obviously, it is possible for the hydrogen fixing of the layer 18 to take place before the application of the mask 19.

With a target such as that represented in Figures 5, the particle beam which is going to bombard the hydrogen fixed layer 18 in order to make it emit neutrons is coded because it is going to be partially stopped by the mask 19 and only reach the emissive parts 11. The neutron beam is also coded since only the emissive parts 11 are going to emit neutrons.

Such targets may be integrated into a neutron generating tube, particularly to carry out rapid neutron transmission radiography. The energy of the neutrons may be 14 MeV or 2.45 MeV. The reconstructed image then has a resolution comparable to that obtained with a point target and an intensity substantially equal to n times that obtained with a point target, where n is the number of emissive parts 11 of the target.

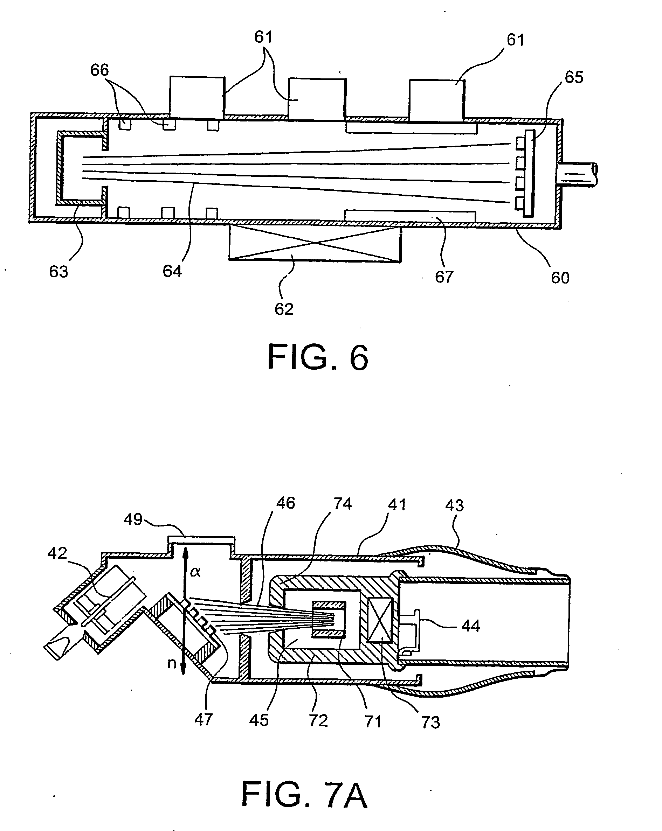

The target may be included in a particle accelerator such as that represented in Figure 6. Said accelerator comprises a tubular body 60 cooperating with pumping means 61 for extracting the non-ionised gas and cooling means 62. At one of the ends of the accelerator is placed means of injecting 63 an ion beam 64 (protons or deuterons). At the other end is placed the target 65 according to the invention that is to be bombarded. In the body 60 of the ion accelerator the ions are firstly focused then accelerated before they reach the target 65. The focusing means referenced 66 may be formed by electrodes. The acceleration means referenced 67 may be formed for example by various high voltage devices. This type of particle accelerator finds application in neutron radiography or the analysis of matter.

It is also advantageous to integrate a target in a neutron generating tube having associated particles, in other words a neutron generating tube equipped with an α particle s detector. An example of this type of tube is represented in Figure 7A. A particularly interesting application of this type of associated particles tube is the imaging and/or the analysis of substances such as the detection of mines in the ground, the detection of illicit materials or explosives in various containers.

A neutron generating tube equipped with an α particle detector is known for example from the patent application FR-A1-2 738 669 in the applicant's name. Said neutron generating tube is equipped with an α particle detector which cooperates with the means of focusing the α particles emitted by a uniform emission target. The means of focusing may be a coded mask type and be placed in the path of the α particles. In the present invention, it is either the ions projected on the target that are coded in the case of the mask, or the target itself which is coded.

The disadvantages of this type of tube compared to that of the present invention are that it is more bulky, since the a particle detector is relatively distant from the target, that it is more complicated to produce and more difficult to use. The distance of the coded mask from the target introduces a fuzziness on the origin of the neutrons which makes the use of the deconvolution algorithm less easy to implement.

We will now refer to Figure 7A. The tube comprises a vacuum jacket 41 intended to contain a gaseous mixture of tritium and/or deuterium under low pressure (of around several tenths of Pascals). The getter referenced 42 enables the supply of a gaseous mixture and acts as a pressure regulator. The jacket 41 is sealed by an electrically insulating part 43 which is crossed by high voltage connections 44 for the energy supply for an ion source 45 placed in said jacket 41. Said ion source 45 ionises the gaseous mixture present in said jacket 41. Said ion source 45 is intended to produce ions that form an ion beam 46 directed towards the patterned target 47 of the invention when they are accelerated by an accelerating electrode 48 placed between the ion source 45 and the patterned target 47. Said ion source 45 may be a Penning type one and comprises an anode 71, a cathode 72 and a permanent magnet 73 which creates a magnetic field normal to the electric field established between the cathode 72 and the anode 71. A ferromagnetic casing 74 surrounds the cathode 72 and the anode 71 and guides the magnetic field generated by the magnet 7 3 so that it re-closes at the level of an air gap crossed by the ion beam 46.

The jacket 41 also contains an α particle detector 49 formed, for example, of a plurality of junction diodes or a scintillator or a series of scintillating optic fibres sensitive to α particles and insensitive to neutrons and photons. The scintillator may be assoc iated with a photomultiplier tube or a microchannel wafer device (not represented).

When an ion hits an emissive part of the target 47, there is a simultaneous emission of a neutron n and an α particle in opposite directions. In the target 47, the emissive parts and their support constitute an impassable obstacle to the α particles that sink into it. The useful α particles reach the α particle detector 49. An α particle provides information on a neutron n emitted in the opposite direction.

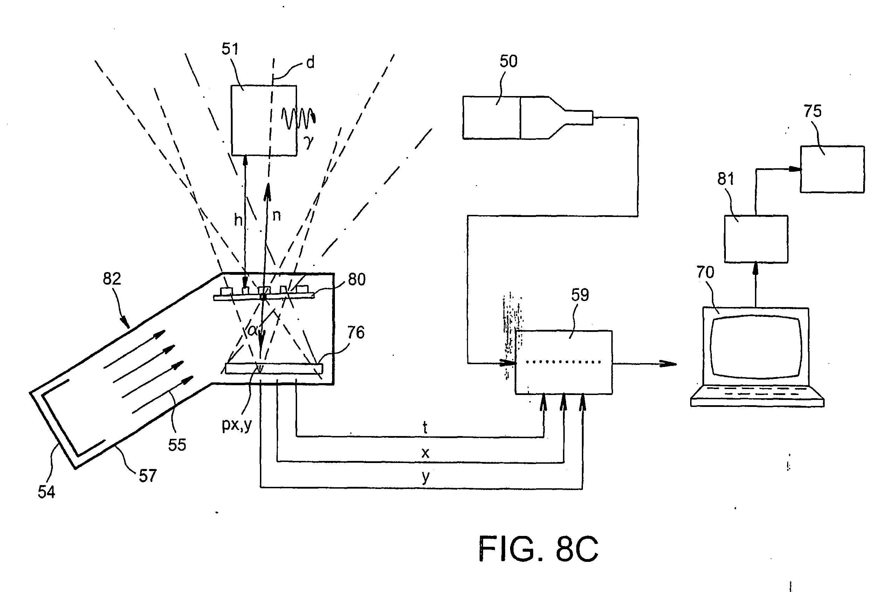

The patterned target 47 may be inclined in relation to the ion beam 46, for example by around 45°, in order to optimise the detection of α particles without disrupting the ion beam 46 - target 47 interaction. The α particle detector 49 is inclined in relation to the target 47; it is directed substantially like the particle beam 46. It could be substantially parallel to the target as shown in Figure 8C.

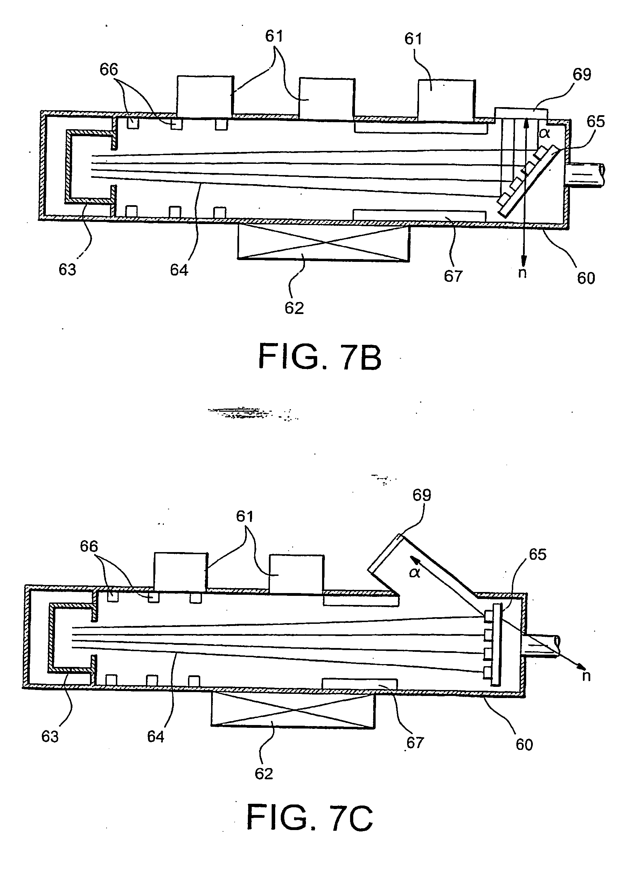

In the same way, a particle accelerator may include an α particle detector as illustrated in Figures 7B and 7C. The α particle detector is referenced 69. It may be the same type as that described in Figure 7A. In Figure 7B, the target 65 is inclined in relation to the ion beam 64 whereas in Figure 7C, it is normal to the ion beam 64.

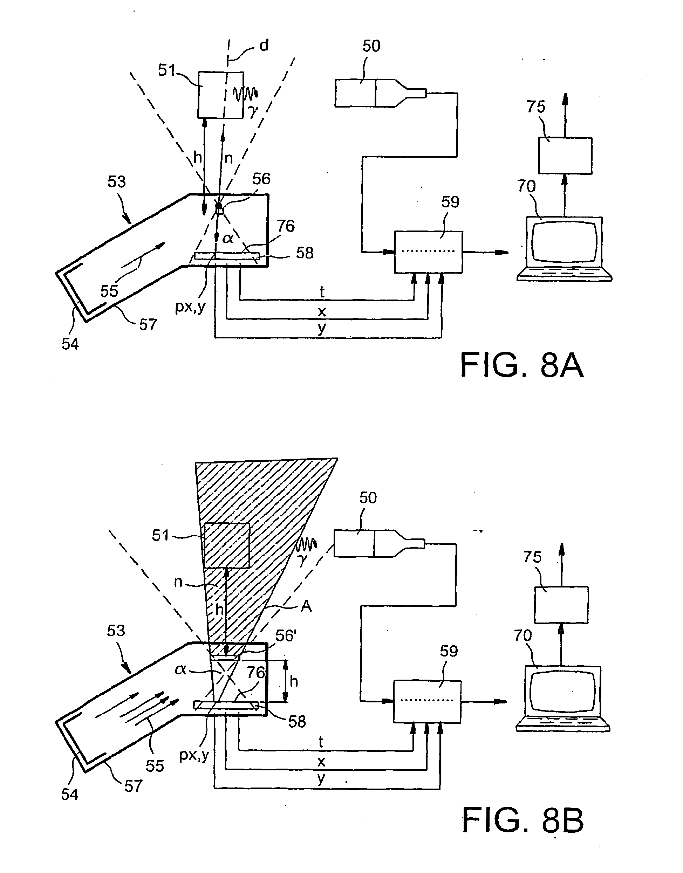

Figures 8A and 8B schematically illustr ate installations for imaging and/or analysis materials, which may be hidden, using a conventional neutron generating tube 53 having associated particles. In Figure 8A, the neutron generating tube 53 is a point target 53 and in Figure 8B it is an extended target 56'. In said neutron generating tubes 53, the ion source is referenced 54 and the ion beam that it produces 55. The ion source 54 and the target 56 or 56' are contained within a vacuum jacket 57. The jacket also contains an α particle detector 58. The reference 51 illustrates an object in which one wishes to analyse the material and/or which one wishes to view in one or two dimensions.

One makes use of the fact that certain neutrons stemming from the target 56 penetrate into the object 51 and interact with the nuclei of atoms in such a way that each nucleus emits in return one or several gamma rays (γ rays) or γ event with an energy characteristic of the energy of the chemical element from which its stems. At least one γ radiation detector 50 is placed near to the object 51. The analysis of the γ spectrum obtained provides information on the composition, chemical element by chemical element, of the materials encountered by the neutron flow emitted by the tube in a given volume of material bombarded with neutrons. But in fact this type of spectrum is difficult to use on its own, because it is drowned in the noise that results from the detection of numerous γ rays generated outside the volume of the object 51, for example by γ radiation generated by the interaction of neutrons with the γ radiation detector 50.

One aims to determine the constitution and / or to obtain a pseudo-image of an object placed at a distance h from the target 56, 56'. Said pseudo -image in two or three dimensions is called a pseudo -image because it is an indirect image of the object. It is not given by the neutrons that cross through the object but by the γ radiation gathered near to the object. It is representative of its chemical constitution. The distance h corresponds to a time of flight t for the neutrons emitted by the target 56, 56'. Said time of flight t is known from the speed of a neutron (5.2 cm/s for neutrons of 14 MeV energy), from its moment of departure known through the detection of the associated a particle which has, for its part, a speed of 1.3 cm/s.

One is interested in γ events detected by staid γ radiation detector 50, associated with this characteristic time of flight t. Said γ events are all linked to the detection of α particles by the detector 58 composed of a plurality of pixels 76 arranged in a matrix. Said α particle detector and the γ radiation detector are linked to treatment means 59 which determine the γ events in coincidence with a pixel p_{x,y} for a given time of flight t.

Calculation means 70 (for example, a personal computer type) connected to the output of the treatment means 59 make it possible to carry out a spectral analysis of the object 51. Spectral deconvolution means 75 connected to the calculation means 70 deliver the pseudo-image in two dimensions or in three dimensions of the object 51, chemical element by chemical element.

The resolution of the pseudo-image depends on the size of the target. We will now refer to Figure 8A which illustrates the case of a point target 56. The smaller the target the better the resolution. Indeed, one p_{x,y} of the pixels 76 of the α particle detector 58 receives the α particles which come from the neutrons n emitted by the point target 56 and said α particles translate the interactions of neutrons n circulating in a straight line d which passes through the pixel p_{x,y} and the point that constitutes the point target 56. The location of the pixel p_{x,y} of the α particle detect or 58 makes it possible to know the trajectory of the neutrons n emitted simultaneously with the α particles in question since it is the straight line d. The γ radiation spectrum obtained for the given time of flight t and for a γ - α coincidence of the time width Δt with the pixel p_{x,y} is the characteristic spectrum of a volume of material, obtained by a projection in volume of the pixel p_{x,y} through the point target 56. The thickness of the material of the volume is defined by the product of the speed of the neutrons multiplied by Δt. However, a neutron generating tube 53 having a point target 56 has a short lifetime. One therefore tends to increase the surface area of the target.

Figure 8B differs from Figure 8A by the fact that the target 56' in not a point target but a extended target. This is an extreme case. The location of an α particle on the α particle detector 58 by a pixel p_{x,y} does not allow the path of the corresponding neutron n to be known. It can only be localised within the interior of a solid angle A, the summit of which is the pixel p_{x,y}, which leans on the contour of the target 56' and which passes through the object 51. This configuration excludes the notion of sharp image.

Figure 8C illustrates an installation for imaging and/or analysing materials, which may be hidden, using with reference 82 a neutron source, either a neutron generating tube of the same type as that in Figure 7A or a particle accelerator of the same type as that in Figures 7B or 7C. Said tube or accelerator contains the patterned target 80. The remainder of the installation is similar to that represented in Figures 8A and 8B with the exception of the fact that the geometric deconvolution means 81 are inserted between the calculation means 70 and the spectral deconvolution means 75. The operating principle of such an installation is similar to that of the installation in Figure 8A with a multitude of distinct point targets. By analogy with the use of the neutron generating tube in Figure 3A, in the absence of geometric deconvolution means, one would obtain at each point of the image of the object 51, the mixed image of the object itself and of the patterned target. The geometric deconvolution means 81, for example taking the form of an inverse algorithm, enable the two mixed images to be separated.

An elementary fragment (not represented) of material of the object 51 contributes to L pixels 76 of the α particle detector 58 and thus to L γ spectra. Everything takes place as if the detection of γ radiation from the object. 51 bombarded with the neutrons n was carried out by the α particle detector 58 itself, through a coded mask with the pattern of the target 80.

If the target 80 is composed of M point targets, the spectrum associated with each of the L pixels 76 of the α particle detector is a combination of M spectra corresponding to M elementary fragments of the object 51 through the intermediary of the target. Mathematically, one obtains a system close to a system of L equations and M unknowns. By inverting this system one may access the spectra of the elementary fragments of the object. In order to be solvable, this system requires that M (number of point targets) is less than L (number of α pixels).

The γ radiation detector 50 could be replaced by a neutron detector such as that bearing the reference 33 in Figure 3A. The principle of using the installation would be the same to carry out the imaging of substances that may be hidden. For this reason, it has not been added to the new figure.

Thus, with neutron generating tubes and particle accelerators according to the invention it is possible to carry out direct imaging such as neutron radiography or indirect imaging such as analysis by γ spectrometry and an associated particle tube. In both cases, the coding of the target allows the coding of the image or the pseudo - image and obtaining a "pure" image or pseudo -image of the object, cleared of the aberrations due to the non -point nature of the targets formed in practice . Consequently, the invention makes it possible to produce systems that have both high geometric resolution and a long lifetime, which were not compatible previously.

Although several embodiments of the present invention have been represented and described in a detailed manner, it will be understood that various changes and modifications may be made without going beyond the scope of the invention.

## Claims

1. Neutron source comprising a target intended to emit neutrons when it is bombarded with particles, **characterised in that** it comprises neutron emissive parts (11) and neutron non-emissive parts (12) which are juxtaposed, said emissive and non-emissive parts forming a pattern of the type of that of a coded mask such that said source emits a neutron flow coded by the pattern of the target.

2. Neutron source according to claim 1, **characterised in that** the emissive parts (11) are formed from at least one metal hydride, the metal (15) of the metal hydride being deposited on a support (14) in non-hydrogen fixing material through a template (16).

3. Neutron source according to claim 1, **characterised in that** the target comprises an extended neutron emissive zone (18) formed from at least one metal hydride, said extended zone (18) cooperating with a mask (19) in neutron non-emissive material, the non-emissive material of the mask (19) partially covering up the extended emissive zone vis-a-vis the particles and forming non-emissive parts (12).

4. Neutron source according to claim 3, **characterised in that** the extended emissive zone (18) is supported by a support (14) in a non-hydrogen fixing material.

5. Neutron source according to one of claims 2 or 4, **characterised in that** the non-hydrogen fixing material of the support (14) is chosen from among copper, silver or gold, said metals being used alone or in combination.

6. Neutron source according to one of claims 1 to 5, **characterised in that** the metal of the metal hydride is chosen from among titanium, zirconium, erbium, scandium and vanadium.

7. Neutron source according to claim 3, **characterised in that** the non-emissive material of the mask (19) is chosen from among molybdenum, steel, iron, copper, tungsten and tantalum, said metals being used alone or in combination.

8. Particle accelerator, **characterised in that** it comprises a neutron source according to one of claims 1 to 7.

9. Application of the particle accelerator according to claim 8 to radiography, in which the target (10) cooperates with the geometric deconvolution means (32) to decode an untreated image (30) given by the neutrons having crossed through an object (4) to be radiographied in a reconstructed image (31) of the object.

10. Particle accelerator according to claim 8, **characterised in that** it is equipped with an α particle detector (69) associated with the emission of neutrons.

11. Particle accelerator according to claim 10, **characterised in that** the α particle detector (69) comprises a plurality of pixels (76) arranged in a matrix.

12. Particle accelerator according to one of claims 10 or 11, **characterised in that** the target (65) is inclined in relation to the direction of the particles (64) that are bombarding it.

13. Particle accelerator according to one of claims 10 to 12, **characterised in that** the target (80) is substantially parallel to the α particle detector (58).

14. Application of the particle accelerator according to one of claims 10 to 13 to the analysis of substances and/or the imaging of substances that may be hidden, said accelerator cooperating with at least one γ radiation detector (50) and geometric deconvolution means (81) for a gamma pseudo-image obtained by coincidence of gamma events and α particles detected by the α particle detector.

15. Application of the particle accelerator according to one of claims 10 to 13 to the imaging of substances that may be hidden, the accelerator cooperating with a neutron detector.

16. Neutron generating tube, **characterised in that** it comprises a neutron source (10) according to one of claims 1 to 7.

17. Application of the neutron generating tube according to claim 16 to radiography, in which the target (10) cooperates with the geometric deconvolution means (32) for decoding an untreated image (30) given by the neutrons having crossed through an object (4) to be radiographied in a reconstructed image (31) of the object.

18. Neutron generating tube according to claim 16, **characterised in that** it is equipped with an α particle detector (49) associated with the emission of neutrons.

19. Neutron generating tube according to claim 18, **characterised in that** the α particle detector (49) comprises a plurality of pixels (76) arranged in a matrix.

20. Neutron generating tube according to one of claims 18 or 19, **characterised in that** the target (47) is inclined in relation to the direction of the particles (64) that are bombarding it.

21. Neutron generating tube according to one of claims 18 or 19, **characterised in that** the target (80) is substantially parallel to the α particle detector (58)

22. Application of the neutron generating tube according to one of claims 18 to 21 to the analysis of substances, and/or the imaging of substances that may be hidden, the tube cooperating with at least one γ radiation detector (50) and geometric deconvolution means (81) for a gamma pseudo-image obtained by coincidence of gamma events and α particles detected by the α particle detector.

23. Application of the neutron generating tube according to one of claims 18 to 21 to the imaging of substances that may be hidden, the tube cooperating with a neutron detector.

## Patentansprüche

1. Neutronenquelle, umfassend ein Target, das dazu ausgelegt ist, Neutronen zu emittieren, wenn es mit Partikeln beschossen wird, **dadurch gekennzeichnet, dass** es Neutronen-emittierende Teile (11) und nicht-Neutronen-emittierende Teile (12) umfasst, die nebeneinander angeordnet sind, wobei die emittierenden und die nicht-emittierenden Teile ein Muster von dem Typ desjenigen einer codierten Maske bilden, derart, dass die Quelle einen durch das Muster des Targets codierten Neutronenfluss emittiert.

2. Neutronenquelle nach Anspruch 1, **dadurch gekennzeichnet, dass** die emittierenden Teile (11) aus wenigstens einem Metallhydrid gebildet sind, wobei das Metall (15) des Metallhydrids auf einem Träger (14) in nicht-wasserstoffbindendem Material durch eine Schablone (16) hindurch abgeschieden ist.

3. Neutronenquelle nach Anspruch 1, **dadurch gekennzeichnet, dass** das Target eine ausgedehnte Neutronen-emittierende Zone (18) umfasst, die aus wenigstens einem Metallhydrid gebildet ist, wobei die ausgedehnte Zone (18) mit einer Maske (19) in nicht-Neutronen emittierendem Material kooperiert, wobei das nicht-emittierende Material der Maske (19) die ausgedehnte emittierende Zone teilweise gegenüber den Partikeln abdeckt und nicht-emittierende Teile (12) bildet.

4. Neutronenquelle nach Anspruch 3, **dadurch gekennzeichnet, dass** die ausgedehnte emittierende Zone (18) durch einen Träger (14) in einem nicht-wasserstoffbindendem Material getragen wird.

5. Neutronenquelle nach einem der Ansprüche 2 oder 4, **dadurch gekennzeichnet, dass** das nicht-wasserstoffbindende Material des Trägers (14) ausgewählt ist aus Kupfer, Silber oder Gold, wobei diese Metalle alleine oder in Kombination verwendet werden.

6. Neutronenquelle nach einem der Ansprüche 1 bis 5, **dadurch gekennzeichnet, dass** das Metall des Metallhydrids ausgewählt ist aus Titan, Zirkon, Erbium, Skandium und Vanadium.

7. Neutronenquelle nach Anspruch 3, **dadurch gekennzeichnet, dass** das nicht-emittierende Material der Maske (19) ausgewählt ist aus Molybdän, Stahl, Eisen, Kupfer, Wolfram und Tantal, wobei die Metalle alleine oder in Kombination verwendet werden.

8. Partikelbeschleuniger, **dadurch gekennzeichnet, dass** er eine Neutronenquelle nach einem der Ansprüche 1 bis 7 umfasst.

9. Anwendung des Partikelbeschleunigers nach Anspruch 8 in der Radiographie, wobei das Target (10) mit der geometrischen Entfaltungseinrichtung (32) kooperiert, um ein unbearbeitetes Bild (30), welches durch die Neutronen geliefert wird, die ein zu radiographierendes Objekt (4) durchquert haben, zu einem rekonstruierten Bild (31) des Objekts zu decodieren.

10. Partikelbeschleuniger nach Anspruch 8, **dadurch gekennzeichnet, dass** er mit einem α-Partikel-Detektor (69) ausgestattet ist, der der Emission von Neutronen zugeordnet ist.

11. Partikeibeschleuniger nach Anspruch 10, **dadurch gekennzeichnet, dass** der α-Partikel-Detektor (69) eine Mehrzahl von Pixeln (76) umfasst, die in einer Matrix angeordnet sind.

12. Partikelbeschleuniger nach einem der Ansprüche 10 oder 11, **dadurch gekennzeichnet, dass** das Target (65) im Bezug zur Richtung der Partikel (64), mit denen es beschossen wird, geneigt ist.

13. Partikelbeschleuniger nach einem der Ansprüche 10 bis 12, **dadurch gekennzeichnet, dass** das Target (80) im Wesentlichen parallel zum α-Partikel-Detektor (58) ist.

14. Anwendung des Partikelbeschleunigers nach einem der Ansprüche 10 bis 13 in der Analyse von Substanzen und/oder Abbildung von Substanzen, die verborgen sein können, wobei der Beschleuniger kooperiert mit wenigstens einem Gamma-Strahlungsdetektor (50) und einer geometrischen Entfaltungseinrichtung (81) für ein Gamma-Pseudobild, das erhalten wird durch die Koinzidenz von Gamma-Ereignissen und α-Partikeln, die durch den α-Partikel-Detektor detektiert werden.

15. Anwendung des Partikelbeschleunigers nach einem der Ansprüche 10 bis 13 in der Abbildung von Substanzen, die verborgen sein können, wobei der Beschleuniger mit einem Neutronendetektor kooperiert.

16. Neutronenerzeugungsrohr, **dadurch gekennzeichnet, dass** es eine Neutronenquelle (10) nach einem der Ansprüche 1 bis 7 umfasst.

17. Anwendung des Neutronenerzeugungsrohrs nach Anspruch 16 in der Radiographie, wobei das Target (10) mit der geometrischen Entfaltungseinrichtung (32) kooperiert, um ein unbearbeitetes Bild (30), welches durch die Neutronen geliefert wird, die ein zu radiographierendes Objekt (4) durchquert haben, zu einem rekonstruierten Bild (31) des Objekts zu decodieren.

18. Neutronenerzeugungsrohr nach Anspruch 16, **dadurch gekennzeichnet, dass** es mit einem α-Partikel-Detektor (49) ausgestattet ist, der der Emission von Neutronen zugeordnet ist.

19. Neutronenerzeugungsrohr nach Anspruch 18, **dadurch gekennzeichnet, dass** der α-Partikel-Detektor (49) eine Mehrzahl von Pixeln (76) umfasst, die in einer Matrix angeordnet sind.

20. Neutronenerzeugungsrohr nach einem der Ansprüche 18 oder 19, **dadurch gekennzeichnet, dass** das Target (47) im Bezug zur Richtung der Partikel (64), mit denen es beschossen wird, geneigt ist.

21. Neutronenerzeugungsrohr nach einem der Ansprüche 18 oder 19, **dadurch gekennzeichnet, dass** das Target (80) im Wesentlichen parallel zum α-Partikel-Detektor (58) ist.

22. Anwendung des Neutronenerzeugungsrohrs nach einem der Ansprüche 18 bis 21 in der Analyse von Substanzen und/oder der Abbildung von Substanzen, die verborgen sein können, wobei das Rohr mit wenigstens einem Gamma-Strahlungsdetektor (50) und einer geometrischen Entfaltungseinrichtung (81) für ein Gamma-Pseudobild kooperiert, das durch eine Koinzidenz von Gamma-Ereignissen und α-Partikeln erhalten wird, die durch den α-Partikel-Detektor detektiert werden.

23. Anwendung des Neutronenerzeugungsrohrs nach einem der Ansprüche 18 bis 21 in der Abbildung von Substanzen, die verborgen sein können, wobei das Rohr mit einem Neutronendetektor kooperiert.

## Revendications

1. Source de neutrons comportant une cible destinée à émettre des neutrons lorsqu'elle est bombardée par des particules, **caractérisée en ce qu'**elle comporte des parties émissives (11) de neutrons et des parties (12) non émissives de neutrons qui sont juxtaposées, ces parties émissives et non émissives formant un motif du type de celui d'un masque codé de telle sorte que ladite source émette un flux de neutrons codé par le motif de la cible.

2. Source de neutrons selon la revendication 1, **caractérisée en ce que** les parties émissives (11) sont formées à base d'au moins un hydrure métallique, le métal (15) de l'hydrure métallique étant déposé sur un support (14) en matériau non hydrurable à travers un pochoir (16).

3. Source de neutrons selon la revendication 1, **caractérisée en ce que** la cible comporte une zone étendue (18) émissive de neutrons réalisée à base d'au moins un hydrure métallique, cette zone étendue (18) coopérant avec un masque (19) en matériau non émissif de neutrons, le matériau non émissif du masque (19) occultant partiellement la zone étendue émissive vis à vis des particules et formant les parties non émissives (12).

4. Source de neutrons selon la revendication 3, **caractérisée en ce que** la zone étendue (18) émissive est supportée par un support (14) en un matériau non hydrurable.

5. Source de neutrons selon l'une des revendications 2 ou 4, **caractérisée en ce que** le matériau non hydrurable du support (14) est choisi parmi le cuivre, l'argent, l'or, ces métaux étant pris seuls ou en combinaison.

6. Source de neutrons selon l'une des revendications 1 à 5, **caractérisée en ce que** le métal de l'hydrure métallique est choisi parmi le titane, le zirconium, l'erbium, le scandium, le vanadium.

7. Source de neutrons selon la revendication 3, **caractérisée en ce que** le matériau non émissif du masque (19) est choisi parmi le molybdène, l'acier, le fer, le cuivre, le tungstène, le tantale, ces métaux étant pris seuls ou en combinaison.

8. Accélérateur de particules, **caractérisé en ce qu'**il comporte une source de neutrons (65) selon l'une des revendications 1 à 7.

9. Application de l'accélérateur de particules selon la revendication 8, à la radiographie, dans laquelle la cible (10) coopère avec des moyens de déconvolution géométrique (32) pour décoder une image brute (30) donnée par les neutrons ayant traversés un objet (4) à radiographier en une image reconstruite (31) de l'objet.

10. Accélérateur de particules selon la revendication 8, **caractérisé en ce qu'**il est équipé d'un détecteur (69) de particules α associées à l'émission de neutrons.

11. Accélérateur de particules selon la revendication 10, **caractérisé en ce que** le détecteur (69) de particules α comporte une pluralité de pixels (76) agencés en matrice.

12. Accélérateur de particules selon l'une des revendications 10 ou 11, **caractérisé en ce que** la cible (65) est inclinée par rapport à la direction des particules (64) qui la bombardent.

13. Accélérateur de particules selon l'une des revendications 10 à 12, **caractérisé en ce que** la cible (80) est sensiblement parallèle au détecteur de particules α (58).

14. Application de l'accélérateur de particules selon l'une des revendications 10 à 13, à l'analyse de substances et/ou à l'imagerie de substances éventuellement cachées, l'accélérateur coopérant avec au moins un détecteur (50) de rayonnements γ et des moyens de déconvolution géométrique (81) d'une pseudo-image gamma obtenue par coïncidence d'événements gamma et de particules α détectées par le détecteur de particules α.

15. Application de l'accélérateur de particules selon l'une des revendications 10 à 13, à l'imagerie de substances éventuellement cachées, l'accélérateur coopérant avec un détecteur de neutrons.

16. Tube générateur de neutrons, **caractérisé en ce qu'**il comporte une source de neutrons (10) selon l'une des revendications 1 à 7.

17. Application du tube générateur de neutrons selon la revendication 16, à la radiographie, dans laquelle la cible (10) coopère avec des moyens de déconvolution géométrique (32) pour décoder une image brute (30) donnée par les neutrons ayant traversés un objet (4) à radiographier en une image reconstruite (31) de l'objet.

18. Tube générateur de neutrons selon la revendication 16, **caractérisé en ce qu'**il est équipé d'un détecteur (49) de particules α associées à l'émission de neutrons.

19. Tube générateur de neutrons selon la revendication 18, **caractérisé en ce que** le détecteur (49) de particules α comporte une pluralité de pixels (76) agencés en matrice.

20. Tube générateur de neutrons selon l'une des revendications 18 ou 19, **caractérisé en ce que** la cible (47) est inclinée par rapport à la direction des particules (46) qui la bombardent.

21. Tube générateur de neutrons selon l'une des revendications 18 ou 19, **caractérisé en ce que** la cible (80) est sensiblement parallèle au détecteur de particules α (58).

22. Application du tube générateur de neutrons selon l'une des revendications 18 à 21, à l'analyse de substances et/ou à l'imagerie de substances éventuellement cachées, le tube coopérant avec au moins un détecteur (50) de rayonnements γ et des moyens de déconvolution géométrique (81) d'une pseudo-image gamma obtenue par coïncidence d'événements gamma et de particules α détectées par le détecteur de particules α.

23. Application du tube générateur de neutrons selon l'une des revendications 18 à 21, à l'imagerie de substances éventuellement cachées, le tube coopérant avec un détecteur de neutrons.
